# DEMANDE DE BREVET EUROPEEN

(11) **EP 1 634 762 A1**
(43) Date de publication de la demande: **15.03.2006**
(21) Numéro de dépôt: 05300610.2
(22) Date de dépôt: 21.07.2005
(51) Int. Cl.: B60K 37/06, B60R 11/02, B60R 25/04

(54) **Véhicule automobile**

(30) Priorité: 27.08.2004 FR 0409170
(71) Demandeur: Peugeot Citroen Automobiles SA, 78943 Vélizy-Villacoublay Cedex (FR)
(72) Inventeur: QUEYROI, Frédéric, 91170, VIRY CHATILLON (FR); KLEIN, Jacques, 92320, CHATILLON (FR); DEMICHEL, Guy, 91470, LES MOLIERES (FR)
(74) Mandataire: Ménès, Catherine

(57) **Abrégé**

Ce véhicule automobile (2) comprend un système électronique (20) adapté pour fournir au moins une première information représentant la vitesse du véhicule, et des premiers moyens de communication (26), adaptés pour une communication du système électronique (20) avec un dispositif électronique (24) qui est mobile par rapport au véhicule.

Les premiers moyens de communication (26) sont adaptés pour envoyer la première information au dispositif électronique mobile (24) en vue de l'affichage de ladite première information sur celui-ci.

Applications aux moto-quads.

## Description

La présente invention concerne un véhicule automobile, du type comprenant :
- un système électronique adapté pour fournir au moins une première information représentant la vitesse du véhicule, et
- des premiers moyens de communication, adaptés pour une communication du système électronique avec un dispositif électronique qui est mobile par rapport au véhicule.

Elle s'applique notamment à des motos-quads.

On connaît dans l'état de la technique des véhicules automobiles, tels que des voitures de tourisme, qui sont munis d'un système électronique adapté pour relever une information correspondant à la vitesse du véhicule. Cette information est envoyée à une unité d'affichage qui est fixée à demeure sur le véhicule en vue de l'information du conducteur de la vitesse actuelle du véhicule.

Ces véhicules comprennent en outre des supports destinés à recevoir un assistant numérique personnel (PDA) qui est adapté pour communiquer avec le système électronique afin de recevoir et d'afficher d'autres informations concernant le véhicule, comme par exemple la température du moteur.

Toutefois, ces véhicules ont un coût de fabrication élevé en raison de l'unité d'affichage nécessaire pour afficher la vitesse du véhicule.

De plus, les unités d'affichage et les assistants numériques personnels sont encombrants.

L'invention a pour but de pallier l'inconvénient mentionné, et de proposer un véhicule automobile qui ait un faible coût de fabrication.

A cet effet, l'invention a pour objet un véhicule automobile du type précité, caractérisé en ce que les premiers moyens de communication sont adaptés pour envoyer la première information au dispositif électronique mobile en vue de l'affichage de ladite première information sur celui-ci.

Selon des modes particuliers de réalisation, l'invention comporte l'une ou plusieurs des caractéristiques suivantes :
- le système électronique est adapté pour fournir au moins une information supplémentaire représentant au moins une grandeur d'utilisation du véhicule, et en ce que les moyens de communication sont adaptés pour envoyer la ou chaque information supplémentaire au dispositif électronique mobile en vue de leur affichage.
- l'au moins une information supplémentaire comprend une deuxième information représentant l'autonomie restante du véhicule.
- le véhicule comprend une batterie, et l'information supplémentaire comprend une troisième information représentant l'état de chargement de la batterie.
- le véhicule comprend un réservoir d'hydrogène, et l'information supplémentaire comprend une quatrième information représentant la réserve en hydrogène dans le réservoir.
- les moyens de communication comprennent une liaison sans fil, notamment selon l'un des standards « Bluetooth » ou « Wifi ».
- les moyens de communication comprennent une liaison avec fil, notamment selon le standard « Controller Area Network » (CAN).
- le véhicule comprend un dispositif électronique mobile muni d'un écran et adapté pour communiquer avec le système électronique par l'intermédiaire des premiers moyens de communication, et le dispositif électronique mobile est adapté pour afficher ladite première information sur l'écran.
- le dispositif électronique mobile est un assistant numérique personnel (PDA).
- le dispositif électronique mobile comprend des deuxièmes moyens de communication, qui sont des moyens de communication de téléphone mobile, notamment selon l'un des standards « GSM » ou « UMTS ».
- le dispositif électronique mobile comprend des moyens d'appel d'urgence, des moyens de réception de télévision et/ou des moyens de réception de radio.
- le dispositif électronique mobile comporte des moyens adaptés pour calculer la position du véhicule, notamment un module de réception de signaux du Global Positioning System (GPS).
- le dispositif électronique mobile comporte un module d'authentification, et il est adapté pour envoyer un code d'authentification vers le système électronique qui est adapté pour permettre où d'interdire le démarrage du moteur du véhicule en fonction d'une vérification du code d'authentification.
- le système électronique est relié au moteur du véhicule, et le dispositif électronique mobile comporte des moyens adaptés pour envoyer une information au système électronique représentant une commande de démarrage où d'arrêt du moteur.
- le véhicule automobile est un moto-quad, et il comprend un support pour le dispositif électronique mobile, dans lequel le dispositif électronique mobile peut être inséré et fixé de manière libérable.

L'invention sera mieux comprise à la lecture de la description qui va suivre, donnée uniquement à titre d'exemple, et faite en se référant aux dessins annexés, sur lesquels :
- la Figure 1 est une vue schématique de côté d'un moto-quad selon l'invention ;

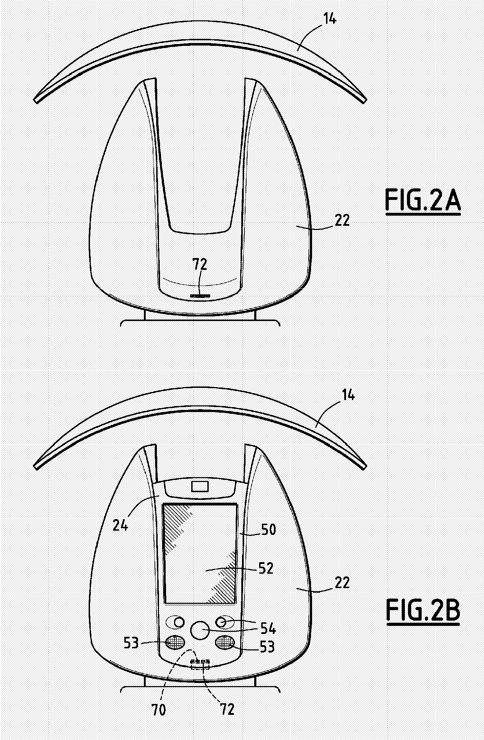

- la Figure 2A est une vue d'un support d'assistant numérique personnel installé sur le moto-quad de la Figure 1, sans l'assistant numérique personnel en place ;
- la Figure 2B est une vue analogue à la Figure 2A, l'assistant numérique personnel étant installé sur le support; et
- la Figure 3 est un organigramme représentant schématiquement le système électronique du moto-quad selon l'invention.

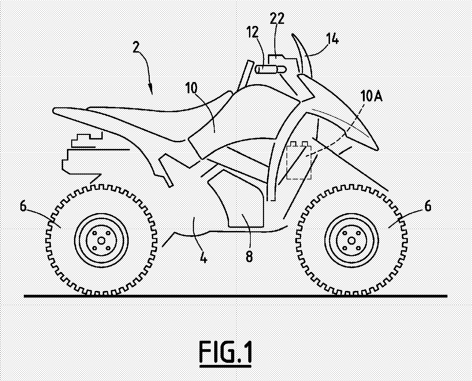

Sur la Figure 1 est représenté, en vue de côté, un véhicule automobile, en l'occurrence un moto-quad, désigné par la référence générale 2.

Le moto-quad comprend un châssis 4, quatre roues 6 qui sont entraînées par un moteur 8, ainsi qu'un réservoir de carburant 10. Le moto-quad 2 comprend une batterie 10A. Le moteur 8 est par exemple un moteur à hydrogène, et le réservoir de carburant 10 comprend de l'hydrogène H₂. Le véhicule 2 comprend en outre un guidon 12 et un pare-brise 14.

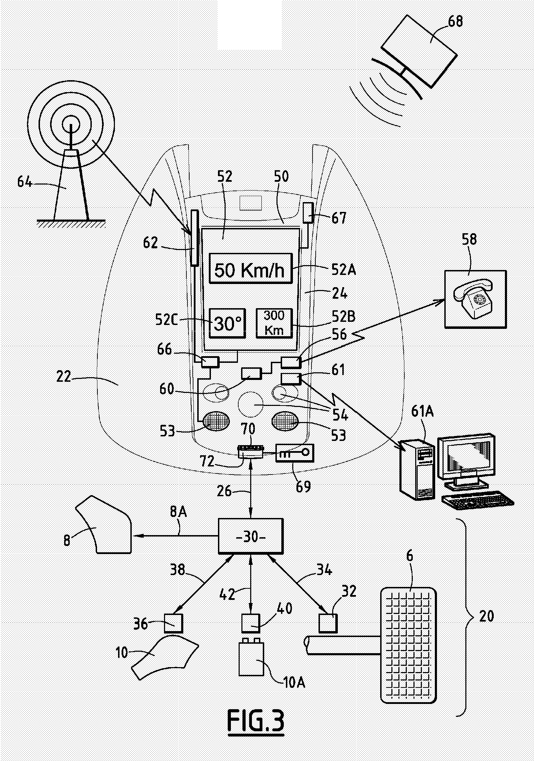

Sur le véhicule automobile 2 sont installés un système électronique 20, qui est représenté schématiquement sur la Figure 3, un support 22 et un assistant numérique personnel 24 (PDA), qui est disposé de manière libérable dans le support 22.

Le moto-quad 2 est en outre muni de premiers moyens de communication 26, qui sont adaptés pour une communication du système électronique 20 avec l'assistant numérique personnel 24.

Le système électronique 20 comporte une unité de traitement 30, par exemple constituée par un microcontrôleur, et un capteur 32 de la vitesse de rotation des roues 6. Ce capteur 32 est relié à l'unité de traitement 30 par une liaison 34. Cette liaison 34 est adaptée pour envoyer l'information représentant le nombre de tours des roues 6 vers l'unité 30.

En variante, le capteur 32 peut être adapté pour relever toute autre information représentant la vitesse du véhicule, par exemple le nombre de tours du moteur et/ou des arbres d'une transmission (non représentée).

Le système électronique 20 est en outre muni d'un capteur 36 qui est adapté pour relever la quantité de carburant, donc de H₂, restant dans le réservoir 10, ce capteur 36 étant relié à l'unité de traitement 30 par une liaison 38. Cette liaison 38 est adaptée pour envoyer l'information représentant la quantité de carburant vers l'unité 30.

Le système électronique 20 dispose en outre d'un capteur 40 qui est adapté pour relever l'état de chargement de la batterie 10A, et qui est relié à l'unité 30 par une liaison 42. Cette liaison 42 est adaptée pour envoyer l'information représentant l'état de chargement vers l'unité 30.

L'unité 30 est en outre liée au moteur 8 par une ligne de commande 8A, par laquelle l'unité 30 peut démarrer où arrêter le moteur.

L'assistant numérique personnel 24 comporte un boîtier 50, sur lequel est fixé un écran 52, ainsi que deux haut-parleurs 53 et plusieurs touches de commande 54.

L'assistant numérique 24 comprend en outre un module 56 de téléphone mobile, qui est adapté pour établir une liaison sans fil avec un réseau téléphonique 58. Le module 56 est de préférence adapté pour établir cette liaison au moyen du standard UMTS. Alternativement cette liaison est établie selon le standard « GSM ». Une touche de secours 60 est disposée sur l'assistant numérique personnel 24 qui est reliée au module 56 et qui est adaptée pour déclencher un appel d'urgence via le réseau 58.

L'assistant numérique 24 PDA comprend en outre une interface Transmission Control Protocol/ Internet Protocol 61 (TCP/IP) permettant un accès du PDA 24 à Internet 61A.

L'assistant numérique 24 comprend par ailleurs une antenne 62, qui est adaptée pour recevoir un programme de télévision et/ou de radio, émis par une station de télé et/ou de radio 64. A cet effet, un module de décodage de télévision ou de radio 66 est disposé dans le boîtier 50. Le module 66 est relié à l'antenne 62. Le module de décodage 66 est également relié à l'écran 52 et aux haut-parleurs. Ainsi, le module est adapté pour afficher un programme de télévision sur cet écran 52 ou de reproduire un programme de radio par les haut-parleurs 53.

Un module GPS 67 est disposé dans le PDA. Ce module 67 permet de calculer et d'afficher de manière continue la position du véhicule à partir de signaux émis par un satellite 68 du système « Global Positioning System » (GPS). Le module 67 est relié à l'écran 52 afin d'afficher la position calculée.

Par ailleurs, un module 69 de clé de contact et d'anti-démarrage est disposé dans le PDA. Ce module 69 est adapté pour envoyer un code individuel d'authentification via les moyens de communication 26 à l'unité 30. L'unité 30 est adaptée pour vérifier la concordance de ce code avec un code déterminé et d'admettre ou d'interdire le démarrage du moteur 8 en fonction du résultat de cette vérification.

Le module 69 est également lié aux touches 54. Le module 69 est ainsi adapté pour envoyer une information représentant la commande « démarrer le moteur » ou « arrêter le moteur » via les moyens de communication 26 à l'unité 30, qui démarre ou arrête le moteur en conséquence. Le démarrage et l'arrêt du moteur 8 peuvent ainsi être contrôlés par l'intermédiaire du dispositif 24. En conséquence une clé de contact séparée n'est pas nécessaire.

Le PDA 24 comporte en outre des contacts 70 disposés sur la surface extérieure du boîtier 50.

Le support 22 a une forme sensiblement de U, de telle sorte que le PDA 24 peut être fixé de manière libérable entre les deux branches du « U ». Lorsque le PDA 24 se trouve en dehors du support 22, il est mobile par rapport au véhicule 2. La branche centrale du « U » comporte des contacts 72 qui sont complémentaires des contacts 70 et qui sont reliés aux moyens de communication 26.

Les moyens de communication 26 comprennent une liaison avec fil, qui est adaptée pour échanger des données entre l'unité de traitement 30 et le PDA 24 selon le standard Controller Area Network (CAN). Alternativement, la liaison est une liaison selon le standard « ETHERNET ». La liaison par fil peut comprendre des fils en métal classiques ou des fibres optiques pour la transmission des signaux. Alternativement, les moyens de communication 26 comprennent une liaison sans fil, qui est adaptée pour échanger des données entre l'unité de traitement 30 et le PDA 24 selon le standard BLUETOOTH ou WIFI.

L'unité de traitement 30 est adaptée pour relever la vitesse de rotation de la roue 6 au moyen du capteur 32 par l'intermédiaire de la liaison 34, et pour envoyer cette information à l'assistant numérique personnel 24 via les moyens de communication 26. L'assistant 24 est adapté pour recevoir cette information et pour l'afficher sur l'écran 52, par exemple dans une fenêtre 52A.

L'unité de traitement 30 est en outre adaptée pour calculer, à partir des données envoyées par les capteurs 32 et 36 l'autonomie restante du véhicule 2, et de l'envoyer par l'intermédiaire des moyens 26 vers le PDA 24, qui est adapté pour afficher cette autonomie restante sur une fenêtre 52B de l'écran 52.

En outre, le système 20 peut comporter d'autres capteurs reliés à l'unité 30, tel qu'un capteur de température adapté pour relever la température du moteur 8. Ainsi la température peut être affichée sur une fenêtre 52C de l'écran 52.

L'unité 30 est en outre adaptée pour envoyer des informations concernant le diagnostique et l'entretien du véhicule, telles qu'une information si un vidange est nécessaire, vers l'assistant 24.

Il est à noter que l'écran 52 du PDA 24 est le seul écran d'affichage du véhicule automobile 2 qui est relié au système 20, de telle sorte que toutes les informations nécessaires à afficher sont affichées sur cet écran 52.

Le véhicule automobile selon l'invention a un faible coût de fabrication étant donné qu'un écran séparé pour l'affichage de la vitesse n'est pas nécessaire. De plus, l'utilisation d'un seul assistant 24 comme moyen d'affichage conduit à un faible encombrement, ce qui est particulièrement avantageux dans le cas d'un moto-quad.

En variante, l'assistant numérique personnel peut être substitué par un autre dispositif électronique mobile tel qu'un téléphone mobile ou un ordinateur portable. De manière générale, le dispositif électronique comporte un processeur, une mémoire vive, un écran et une mémoire morte.

## Revendications

1. Véhicule automobile (2), du type comprenant
- un système électronique (20) adapté pour fournir au moins une première information représentant la vitesse du véhicule, et
- des premiers moyens de communication (26), adaptés pour une communication du système électronique (20) avec un dispositif électronique (24) qui est mobile par rapport au véhicule,
**caractérisé en ce que** les premiers moyens de communication (26) sont adaptés pour envoyer la première information au dispositif électronique mobile (24) en vue de l'affichage de ladite première information exclusivement sur celui-ci.

2. Véhicule automobile selon la revendication 1, **caractérisé en ce que** le système électronique (20) est adapté pour fournir au moins une information supplémentaire représentant au moins une grandeur d'utilisation du véhicule, et **en ce que** les moyens de communication (26) sont adaptés pour envoyer la ou chaque information supplémentaire au dispositif électronique mobile (24) en vue de leur affichage.

3. Véhicule automobile selon la revendication 2, **caractérisé en ce que** l'au moins une information supplémentaire comprend une deuxième information représentant l'autonomie restante du véhicule (2).

4. Véhicule automobile selon la revendication 2 ou 3, **caractérisé en ce qu'**il comprend une batterie (10A), et **en ce que** l'information supplémentaire comprend une troisième information représentant l'état de chargement de la batterie (10A).

5. Véhicule automobile selon l'une quelconque des revendications 2 à 4, **caractérisé en ce qu'**il comprend un réservoir d'hydrogène (10), et **en ce que** l'information supplémentaire comprend une quatrième information représentant la réserve en hydrogène (H2) dans le réservoir (10).représentant la réserve en hydrogène (H₂) dans le réservoir (10).

6. Véhicule automobile selon l'une quelconque des revendications précédentes, **caractérisé en ce que** les moyens de communication (26) comprennent une liaison sans fil, notamment selon l'un des standards « Bluetooth » ou « Wifi ».

7. Véhicule automobile selon l'une quelconque des revendications précédentes, **caractérisé en ce que** les moyens de communication (26) comprennent une liaison avec fil, notamment selon le standard « Controller Area Network » (CAN).

8. Véhicule automobile selon l'une quelconque des revendications 1 à 7, **caractérisé en ce qu'**il comprend un dispositif électronique mobile (24) muni d'un écran (52) et adapté pour communiquer avec le système électronique (20) par l'intermédiaire des premiers moyens de communication (26), et **en ce que** le dispositif électronique mobile (24) est adapté pour afficher ladite première information sur l'écran (52).

9. Véhicule automobile selon la revendication 8, **caractérisé en ce que** le dispositif électronique mobile (24) est un assistant numérique personnel (PDA).

10. Véhicule automobile selon la revendication 8 ou 9, **caractérisé en ce que** le dispositif électronique mobile (24) comprend des deuxièmes moyens de communication (56), qui sont des moyens de communication de téléphone mobile, notamment selon l'un des standards « GSM » ou « UMTS ».

11. Véhicule automobile selon l'une quelconque des revendications 8 à 10, **caractérisé en ce que** le dispositif électronique mobile (24) comprend des moyens d'appel d'urgence (60).

12. Véhicule automobile selon l'une quelconque des revendications 8 à 11, **caractérisé en ce que** le dispositif électronique mobile (24) comprend des moyens de réception de télévision (50, 62, 66).

13. Véhicule automobile selon l'une quelconque des revendications 8 à 12, **caractérisé en ce que** le dispositif électronique mobile (24) comprend des moyens de réception de radio (53, 62, 66).

14. Véhicule automobile selon l'une quelconque des revendications 8 à 13, **caractérisé en ce que** le dispositif électronique mobile (24) comporte des moyens adaptés pour calculer la position du véhicule (67), notamment un module de réception de signaux du Global Positioning System (GPS).

15. Véhicule automobile selon l'une quelconque des revendications 8 à 14, **caractérisé en ce que** le dispositif électronique mobile (24) comporte un module (69) d'authentification, et **en ce qu'**il est adapté pour envoyer un code d'authentification vers le système électronique (20) qui est adapté pour permettre où d'interdire le démarrage du moteur (8) du véhicule en fonction d'une vérification du code d'authentification.

16. Véhicule automobile selon l'une quelconque des revendications 8 à 15, **caractérisé en ce que** le système électronique (20) est relié au moteur (8) du véhicule, et **en ce que** le dispositif électronique mobile (24) comporte des moyens (69) adaptés pour envoyer une information au système électronique (20) représentant une commande de démarrage où d'arrêt du moteur (8).

17. Véhicule automobile selon l'une quelconque des revendications 1 à 16, **caractérisé en ce que** le véhicule automobile est un moto-quad (2).

18. Véhicule automobile selon l'une quelconque des revendications 1 à 17, **caractérisé en ce qu'**il comprend un support (22) pour le dispositif électronique mobile (24), dans lequel le dispositif électronique mobile peut être inséré et fixé de manière libérable.
